(19) Europäisches Patentamt
European Patent Office
Office européen des brevets

(11) Veröffentlichungsnummer: **0 035 174**
**B1**

(12) # EUROPÄISCHE PATENTSCHRIFT

(45) Veröffentlichungstag der Patentschrift: **01.06.83**

(21) Anmeldenummer: **81101165.9**

(22) Anmeldetag: **19.02.81**

(51) Int. Cl.³: **C 09 B 57/04**, C 08 K 5/34, C 09 D 11/02, C 09 D 3/00// C07D403/04

(54) **Neue Isoindolinfarbstoffe und deren Verwendung.**

(30) Priorität: **27.02.80 DE 3007300**

(43) Veröffentlichungstag der Anmeldung: **09.09.81 Patentblatt 81/36**

(45) Bekanntmachung des Hinweises auf die Patenterteilung: **01.06.83 Patentblatt 83/22**

(84) Benannte Vertragsstaaten: **CH DE FR GB IT LI**

(56) Entgegenhaltungen:
**FR A 2 107 064**
**FR A 2 135 259**
**FR A 2 355 886**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Lotsch, Wolfgang, Dr.**
**Stettiner Strasse 32**
**D-6711 Beindersheim (DE)**
Erfinder: **Kemper, Reinhard, Dr.**
**Viernheimer Weg 41**
**D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

# Neue Isoindolinfarbstoffe und deren Verwendung

Die Erfindung betrifft neue Isoindolinfarbstoffe und deren Verwendung.

Die neuen Farbstoffe haben die allgemeine Formel I

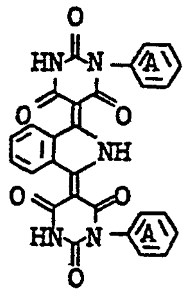

(I)

in der die Phenylreste A, gegebenenfalls durch nicht löslichmachende Gruppen substituiert sind.

Die neuen Farbstoffe (I) sind Pigmente, die Lacke, Kunststoffe und Druckfarben in gelben bis orangen Farbtönen mit hoher Farbstärke anfärben. Die Färbungen weisen sehr gute Licht- und Wetterechtheiten sowie sehr gute Migrationsechtheiten auf.

Aus der FR-A 2 355 886 sind Farbstoffe bekannt, bei denen sich die Barbitursäurereste außer von der Barbitursäure u. a. auch von der N-Methyl-, der N,N'-Dimethyl- und der N,N'-Diphenylbarbitursäure ableiten. Der durch Kondensation von 2 Mol N,N'-Diphenylbarbitursäure und 1 Mol 1,3-Diiminoisoindolin erhältliche Farbstoff, der zu den Farbstoffen der vorliegenden Erfindung als nächstliegender Stand der Technik anzusehen ist, ist den Farbstoffen der Formel I, in der beide Phenylreste A unsubstituiert oder in 4-Stellung durch Methoxy, Methyl oder Chlor substituiert sind, in der Lichtechtheit und in der Weichmacherechtheit deutlich unterlegen.

Unter nicht löslichmachende Substituenten werden solche verstanden, die weder in Wasser noch in organischen Lösungsmitteln Löslichkeit des Farbstoffs bewirken. Solche Substituenten sind beispielsweise Halogen, Alkyl oder Alkoxy mit je 1 bis 4 C-Atomen, Nitro, Trifluormethyl, Carbamoyl, Ureido, Sulfamoyl oder Cyan ; Alkoxycarbonyl, Alkanoyl, N-Alkylcarbamoyl, N-Alkylureido oder Alkanoylamino mit insgesamt je 2 bis 6 C-Atomen ; Alkylsulfonyl oder Alkylsulfamoyl mit je 1 bis 6 C-Atomen ; Aryloxycarbonyl, Aroyl, Aroylamino, Arylsulfonyl, N-Arylcarbamoyl, N-Arylsulfamoyl, Aryl, N-Arylureido, Arylazo, Aryloxy oder ein ankondensierter 5 oder 6 gliedriger Heteroring, der im Ring eine 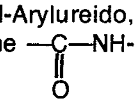 Gruppierung enthält.

Als nicht löslichmachende Substituenten sind Chlor, Brom, $C_1$- bis $C_4$-Alkyl, $C_1$- bis $C_4$-Alkoxy und Phenoxy bevorzugt. Die Zahl dieser Substituenten kann bis zu 2, vorzugsweise 0 oder 1, betragen. Im Falle von 2 Substituenten können diese gleich oder verschieden sein.

Bevorzugt sind Farbstoffe der Formel I, in der die Phenylreste A gegebenenfalls durch Chlor, Brom, $C_1$- bis $C_4$-Alkyl oder $C_1$- bis $C_4$-Alkoxy ein- oder zweifach substituiert sind, wobei bei 2 Substituenten diese gleich oder verschieden sein können.

Besonders bevorzugt sind Farbstoffe der Formel III,

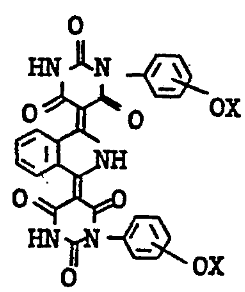

(III)

in der X $C_1$- bis $C_4$-Alkyl, Phenyl oder bedeutet und der Substituent —OX in 3- oder 4-Stellung steht.

Die neuen Farbstoffe erhält man durch Kondensieren von einem Mol eines 1,3-Diiminoisoindolins der Formel IV

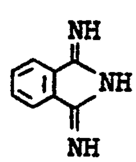

(IV)

mit 2 Mol einer Barbitursäure der Formel

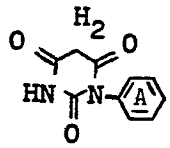

(V)

worin A die oben angegebene Bedeutung hat. Für den Fall, daß im Farbstoff die Phenylreste A verschieden sein sollen, können Gemische von Barbitursäuren (V) mit (IV) kondensiert werden.

Die Kondensation der Diiminoisoindoline der Formel (IV) mit der Barbitursäure (V) kann entsprechend den Angaben in der DE-A 2 628 409 in Wasser oder in einem organischen Lösungs- oder Verdünnungsmittel oder Gemischen davon erfolgen. Besonders gut erfolgt die Kondensation in aliphatischen Mono- oder Dicarbonsäuren wie Ameisensäure, Essigsäure, Propionsäure oder Mischungen davon, weshalb diese Lösungsmittel bevorzugt verwendet werden. Die Menge des verwendeten Lösungsmittels ist unkritisch. Die Mindestmenge wird durch die Rührbarkeit des Reaktionsgemisches bestimmt. Im allgemeinen wendet man die 10- bis 20-fache Gewichtsmenge an Lösungsmittel, bezogen auf die angewandte Barbitursäure, an.

Die Umsetzung erfolgt in der Regel bei Temperaturen zwischen 50 °C und 150 °C, vorzugsweise zwischen 70 °C und 120 °C.

Die Verfahrensprodukte werden durch Filtrieren aus dem Reaktionsgemisch isoliert und können im allgemeinen als solche direkt als Pigment verwendet werden. Man kann die Verfahrensprodukte aber auch nach an sich bekannten Formierungsverfahren in für den vorgesehenen Verwendungszweck optimale Pigmentformen überführen.

Die folgenden Beispiele sollen die Erfindung weiter erläutern. Die Teile und Prozentangaben beziehen sich auf das Gewicht.

## Beispiel 1

a) 140 Teile N-(4′-Methoxyphenyl)-barbitursäure und 56 Teile des Monoadduktes von Äthylenglykol an 1,3-Diiminoisoindolin werden in 1 900 Teilen Eisessig 2 Stunden auf 110 °C erwärmt. Die Suspension wird warm filtriert, das Filtergut mit Eisessig und Methanol gewaschen und getrocknet. Ausbeute : 144 Teile des Farbstoffs der Formel I mit

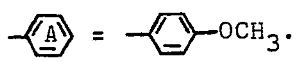

Das Verfahrensprodukt kann direkt als Pigment verwendet werden, z. B. in Lacken oder Kunststoffen. Man erhält Färbungen in reinen Orangetönen mit sehr guten Licht-, Wetter- und Weichmacherechtheiten.

b) 10 Teile des nach a) erhaltenen Farbstoffs werden in 55 Teilen Dimethylformamid 3 h bei 110 °C gerührt. Der Farbstoff wird abfiltriert, mit Dimethylformamid und Methanol gewaschen und getrocknet. Ausbeute : 9 Teile Farbstoff der oben angegebenen Konstitution. Der Farbstoff gibt Färbungen mit im Vergleich zu a) verbesserter Wetterechtheit. Der Farbstoff hat außerdem ein höheres Deckvermögen als der nach a) erhaltene Farbstoff.

## Beispiele 2 bis 8

Man arbeitet wie in beispiel 1 a) angegeben, verwendet jedoch anstelle der N-(4′-Methoxyphenyl)-barbitursäure, die äquivalente Menge an Barbitursäure der Formel (V), wobei

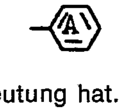

die in der folgenden Tabelle angegebene Bedeutung hat. Man erhält die entsprechenden Farbstoffe der Formel I, in der

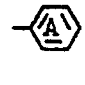

die in der Spalte 2 angegebene Bedeutung hat. Die Farbstoffe färben Lacke, Kunststoffe und Druckfarben in den in Spalte 3 angegebenen Farbtönen an.

| Bsp. | 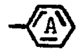 | Farbton der Färbung |
|---|---|---|
| 2 | 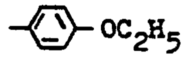 | orange |
| 3 | 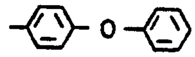 | orange |
| 4 | 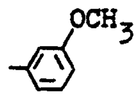 | orange |
| 5 | 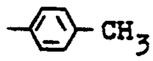 | gelb |
| 6 | 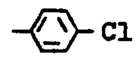 | gelb |
| 7 | 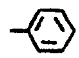 | gelb |

Beispiel 8

(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden orangefarbene Volltonlackierungen mit guter Licht- und Überspritzechtheit erhalten. Durch Zumischen von Titandioxyd werden orangefarbene Weißaufhellungen erhalten.

Verwendet man die in den Beispielen 2 bis 7 beschriebenen Farbstoffe, so werden Lackierungen in ähnlichen Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält orangefarbene Extrudate, deren Färbung gute Lichtechtheit aufweist.

Verwendet man Mischungen aus 0,5 Teilen Farbstoff und 1 Teil Titandioxyd, so erhält man deckende, orangefarbene Färbungen.

Verwendet man die Pigmentfarbstoffe, die nach den Beispielen 2 bis 7 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine orangefarbene Toluol-Tiefdruckfarbe. Die mit dieser Farbe erhaltenen Drucke weisen gute Lichtechtheit auf.

Bei Verwendung der Farbstoffe aus den Beispielen 2 bis 7 werden ähnliche Ergebnisse erhalten.

**Ansprüche**

1. Isoindolinfarbstoffe der Formel

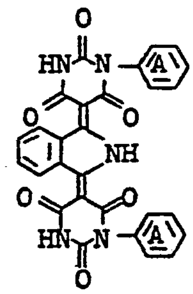

in der die Phenylreste A gegebenenfalls durch nicht löslich machende Gruppen substituiert sind.

2. Isoindolinfarbstoffe gemäß Anspruch 1, dadurch gekennzeichnet, daß die Phenylreste A unsubstituiert oder durch Chlor, Brom, $C_1$- bis $C_4$-Alkyl, $C_1$- bis $C_4$-Alkoxy oder Phenoxy ein- oder zweifach substituiert sind und wobei bei 2 Substituenten diese gleich oder verschieden sind.

3. Isoindolinfarbstoffe gemäß Anspruch 1, dadurch gekennzeichnet, daß die Phenylreste A unsubstituiert oder durch Chlor, Brom, $C_1$- bis $C_4$-Alkyl, $C_1$- bis $C_4$-Alkoxy oder Phenoxy einfach substituiert sind.

4. Isoindolinfarbstoffe gemäß Anspruch 1, gekennzeichnet durch die Formel

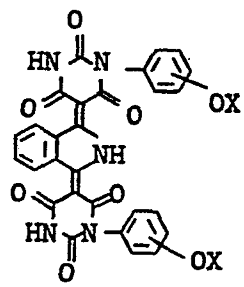

in der X $C_1$- bis $C_4$-Alkyl oder Phenyl bedeutet und der —OX-Rest in 3- oder 4-Stellung steht.

5. Verwendung der Isoindolinfarbstoffe gemäß den Ansprüchen 1 bis 4 zum Pigmentieren von Lacken, Druckfarben und Kunststoffen.

**Claims**

1. An isoindoline colorant of the formula

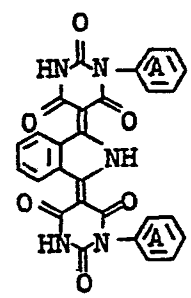

where the phenyl radicals A may be unsubstituted or substituted by groups which do not confer solubility.

2. An isoindoline colorant as claimed in claim 1, wherein the phenyl radicals A rare unsubstituted or mono- or di-substituted by chlorine, bromine, $C_1$-$C_4$-alkyl, $C_1$-$C_4$-alkoxy or phenoxy, and, if there are 2 substituents, these are identical or different.

3. An isoindoline colorant as claimed in claim 1, wherein the phenyl radicals A are unsubstituted or mono-substituted by chlorine, bromine, $C_1$-$C_4$-alkyl, $C_1$-$C_4$-alkoxy or phenoxy.

4. An isoindoline colorant as claimed in claim 1, of the formula

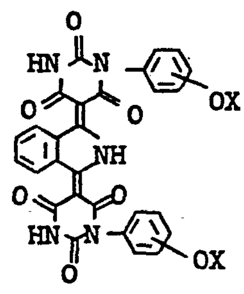

where X is $C_1$-$C_4$-alkyl or phenyl and the OX radical is in the 3- or 4-position.

5. The use of an isoindoline colorant as claimed in claims 1 to 4 for pigmenting surface coatings, printing inks and plastics.

**Revendications**

1. Colorants d'isoindolines de formule

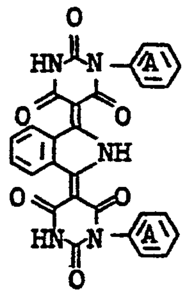

dans laquelle les restes phényle A sont éventuellement substitués par des groupes non solubilisants.

2. Colorants d'isoindolines selon la revendication 1, caractérisés en ce que les restes phényle A sont non substitués ou mono- ou disubstitués par le chlore, le brome, des groupes alkyle en $C_1$-$C_4$, alcoxy en $C_1$-$C_4$ ou phénoxy, les substituants pouvant être identiques ou différents dans le cas d'une disubstitution.

3. Colorants d'isoindolines selon la revendication 1, caractérisés en ce que les restes phényle A sont non substitués ou mono-substitués par le chlore, le brome, des groupes alkyle en $C_1$-$C_4$, alcoxy en $C_1$-$C_4$ ou phénoxy.

4. Colorants d'isoindolines selon la revendication 1, caractérisés en ce qu'ils répondent à la formule

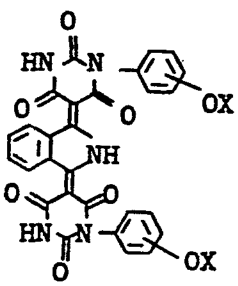

dans laquelle X représente un groupe alkyle en $C_1$-$C_4$ ou phényle et le reste —OX est en position 3 ou 4.

5. Utilisation des colorants d'isoindolines selon les revendications 1 à 4 pour la pigmentation des peintures, encres d'impression et résines synthétiques.